# EUROPÄISCHE PATENTSCHRIFT

(11) **EP 0 628 580 B1**
(45) Veröffentlichungstag und Bekanntmachung des Hinweises auf die Patenterteilung: **16.04.1997**
(21) Anmeldenummer: 94106818.1
(22) Anmeldetag: 02.05.1994
(51) Int. Cl.: C08G 18/08, C08K 3/00, C08K 3/36, C08L 75/00

(54) **Verfahren zur Herstellung von Polymeren, welche Polyurethan- und/oder Polyharnstoff-Gruppierungen aufweisen**
Process for the preparation of polymers containing polyurethane and/or polyurea groups
Procédé de préparation de polymères contenant des groupes de polyuréthane et/ou de polyurée

(30) Priorität: 15.05.1993 DE 4316321
(43) Veröffentlichungstag der Anmeldung: 14.12.1994
(73) Patentinhaber: Th. Goldschmidt AG, D-45127 Essen (DE)
(72) Erfinder: Schäfer, Werner, D-45219 Essen (DE); Scheiba, Manfred, D-45138 Essen (DE); Seyffert, Heribert, Dr., D-45133 Essen (DE)

(56) Entgegenhaltungen:
- WO-A-92/13809
- BE-A- 855 060

## Beschreibung

Die Erfindung betrifft ein Verfahren zur Herstellung von Polymeren, welche Polyurethan- und/oder Polyharnstoff-Gruppierungen aufweisen und feinteilige Füllstoffe enthalten, durch Umsetzung von Verbindungen, welche mindestens zwei Hydroxyl- und/oder Aminogruppen aufweisen, mit mindestens difunktionellen Isocyanaten, gegebenenfalls in Gegenwart von Katalysatoren, und Vermischen mit geeigneten Füllstoffen.

Die Herstellung von Polyharnstoffen durch Polyaddition von Di- oder Polyisocyanaten mit Aminen bereitet in Abwesenheit von Lösungsmitteln häufig Schwierigkeiten. Ein Grund hierfür liegt in der hohen Reaktivität der Ausgangsverbindungen, die oft schon beim Vermischen miteinander reagieren. Zur Erzielung einer einheitlichen Reaktion ist aber eine gute Vermischung Vorbedingung. Sie wird erschwert, wenn aufgrund unterschiedlicher Equivalentgewichte die zu vermischenden Volumina unterschiedlich groß sind und/oder die Viskosität eines Reaktionspartners relativ hoch ist. Ist die Funktionalität der Reaktionspartner hoch, so daß bei der Reaktion hochviskose oder feste Produkte mit hoher Vernetzungsdichte entstehen, ist die weitere Verarbeitung des Reaktionsgemisches und/oder die Abführung der Reaktionswärme erschwert. In jedem Falle müssen die Ausgangsverbindungen getrennt gelagert werden und können erst unmittelbar vor der Reaktion miteinander vermischt werden.

Ähnliche Probleme treten bei der lösungsmittelfreien Herstellung von Polyurethanen aus Di- oder Polyisocyanaten mit Di- oder Polyolen, wie Polyetherolen und Polyesterolen, auf.

Diese Schwierigkeiten können bei der Herstellung von Polyharnstoff- oder Polyurethanformkörpern im Gießverfahren zu Inhomogenitäten infolge unterschiedlicher Temperaturen zwischen Randphase und Kern, Blasen- oder Rißbildung durch Überhitzung im Innern, ungenügende Bindung von Hart- und Weichsegmenten durch stark unterschiedliche Reaktivitäten einzelner Komponenten sowie zu Neben- und Zersetzungsreaktionen führen.

Es ist auch möglich, die Reaktion der Isocyanate mit den Polyethern, Polyestern, Polyaminen oder ähnlich reaktiven Verbindungen mit aktiven Wasserstoffatomen direkt in der Spritzgießmaschine, in einem Reaktionskneter oder einem Reaktionsextruder durchzuführen. Dosierung, Vermischung, Transport des reagierenden Gemisches oder des erhaltenen Polymeren bereiten bei hoher Viskosität der Reaktionspartner und/oder des gebildeten Polymeren Schwierigkeiten oder machen die Anwendung dieser Verfahrensweise unmöglich.

So ist es aus der BE-A-855 060 bekannt, Formkörper aus Polyurethanen mit Sand herzustellen. Wahlweise können dabei die Einzelkomponenten, ggf. einen Katalysator enthaltend, vermischt werden. Zur Herstellung der Formkörper werden die beiden Monomeren/Sand-Mischungen miteinander vermischt. Daraufhin setzt sogleich auch ohne Wärmezufuhr die Reaktion ein. Bei Raumtemperaturen kann die Aushärtungszeit 3 min bis 24 h betragen.

Die vorliegende Erfindung befaßt sich mit dem technischen Problem der lösungsmittelfreien Herstellung derartiger Polyadditionsprodukte unter Vermeidung der vorgenannten Nachteile. Sie befaßt sich insbesondere mit dem Problem, die Ausgangsprodukte gleichmäßig zu dosieren und zu vermischen und die häufig spontan reagierenden Ausgangsprodukte in kontrollierter Weise miteinander umzusetzen. Dabei soll angestrebt werden, möglichst homogene Verfahrensprodukte unter Vermeidung von Temperaturen, die Neben- oder Abbaureaktionen verursachen könnten, zu erhalten. Erwünscht ist dabei auch die Möglichkeit, lagerfähige Mischungen der Reaktionspartner herzustellen, ohne daß in diesen Mischungen bereits eine nennenswerte Reaktion stattfindet.

Dies gelingt bei dem erfindungsgemäßen Verfahren, welches dadurch gekennzeichnet ist, daß man
a) als Feststoffe Aktiv-Kohle oder Blähton in Form eines oberflächenreichen, möglichst feinteiligen Granulates, Ruß oder Kieselsäure mit einer spezifischen Oberfläche nach BET von 50 bis 400 m²/g verwendet,
b) die Hydroxyl- und/oder Aminogruppen aufweisenden Verbindungen und die Isocyanate bei einer Temperatur, bei der die Reaktionskomponenten flüssig vorliegen, jeweils getrennt mit den feinteiligen Feststoffen in solchen Mengen innig vermischt, daß rieselfähige Pulver erhalten werden,
c) die erhaltenen Pulver in den stöchiometrisch erforderlichen Mengen vermischt und
d) das Pulvergemisch der Einwirkung von Scherkräften bei gegebenenfalls erhöhter Temparatur unterwirft.

Ziel des Verfahrensschrittes b) ist die Herstellung rieselfähiger "trockener" Pulver, welche jeweils einen der Reaktionspartner enthalten. Bei einer typischen Verfahrensweise legt man die benötigte Menge des Füllstoffes vor und trägt in diesen langsam die von dem Füllstoff aufzunehmende Menge eines der Ausgangsprodukte unter scherkraftarmem Rühren ein.

Im allgemeinen ist die Verwendung von pyrogen erzeugter oder gefällter Kieselsäure, insbesondere solcher mit einer Oberfläche nach BET von etwa 50 bis 400 m²/g besonders bevorzugt. In Abhängigkeit von dem aufzunehmenden Reaktionspartner kann es von Vorteil sein, in an sich bekannter Weise hydrophobierte Kieselsäure zu verwenden. Die Hydrophobierung kann mit einer monomeren oder polymeren siliciumorganischen Substanz erfolgen.

Das zur Einstellung der Rieselfähigkeit und zur Durchführung der Reaktion optimale Verhältnis von Ausgangsverbindung zu Füllstoff kann in einfacher Weise durch einen Vorversuch ermittelt werden. Vorzugsweise beträgt das Gewichtsverhältnis von Ausgangsverbindung zu Füllstoff etwa 95 : 5 bis 60 : 40. Dabei ist es natürlich möglich, einem der Reaktionspartner, vorzugsweise der Verbindung mit den aktiven Wasserstoffatomen, den zur Durchführung der Reaktion benötigten Katalysator zuzugeben.

Zur Herstellung des gewünschten Polyadditionsproduktes werden beim Verfahrensschritt c) die erhaltenen Gemische aus Füllstoff und jeweiliger Ausgangsverbindung in den stöchiometrisch erforderlichen Mengen vermischt. Die Pulvergemische können bei Raumtemperatur praktisch unbegrenzt gelagert werden, ohne daß eine Reaktion zwischen dem Isocyanat und dem aktive Wasserstoffe aufweisenden Reaktionspartner zu beobachten ist.

Zur Durchführung der Reaktion wird gemäß Verfahrensschritt d) das Pulvergemisch der Einwirkung je nach Füllstoffgehalt geringer bis starker Scherkräfte unterworfen. Im einfachsten Falle führt man das Pulvergemisch dem Eingangsspalt eines Walzenknetwerkes zu. Nach Walzendurchlauf erhält man eine zusammenhängende Folie des gewünschten Polymeren, die je nach Art und Menge des Füllstoffes transparent bis opak ist. Im Falle der Verwendung feinteiliger Kieselsäure erhält man in der Regel transparente Folien, die in geeigneter Weise weiterverarbeitet werden können. Der Gehalt an Füllstoffen stört bei den meisten Verwendungszwecken nicht, da derartige Polymere bei ihrer Verwendung im allgemeinen mit Füllstoffen ohnehin versetzt werden.

Die Reaktion kann bei Raumtemperatur ablaufen oder durch Beheizen des Walzwerkes bei erhöhten Temperaturen vorgenommen werden.

Anstelle eines Walzenstuhles kann auch ein Kneter oder Extruder eingesetzt werden.

Die folgenden Reaktionsschemata zeigen typische Beispiele für Ausführungsformen des erfindungsgemäßen Verfahrens:

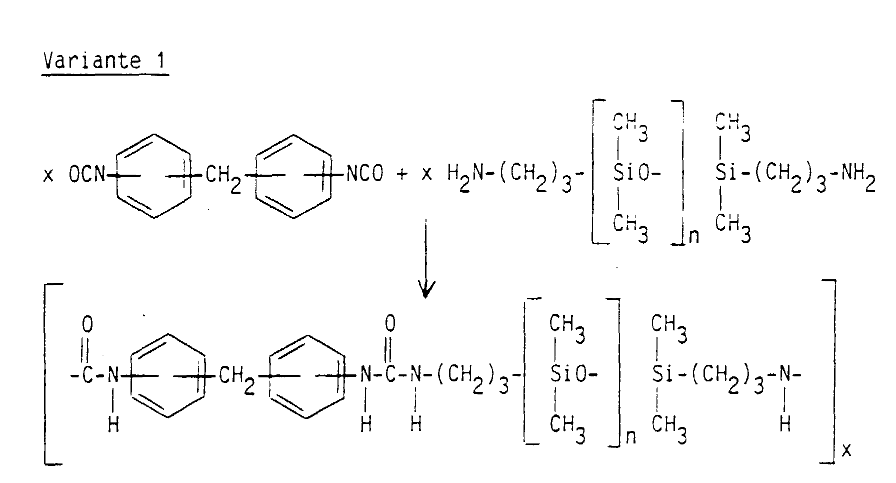

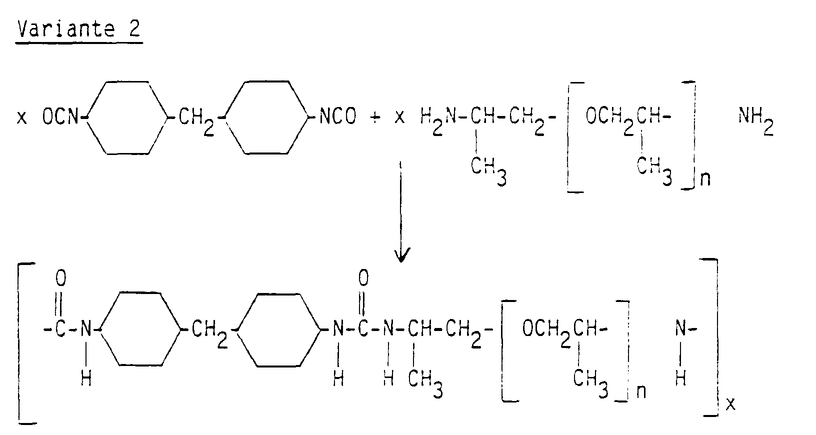

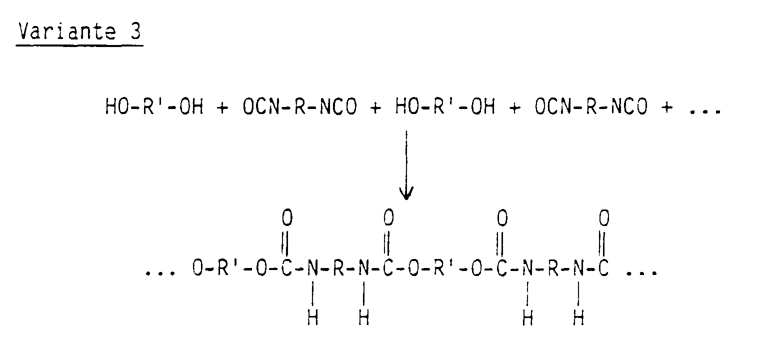

HO-R'-OH = Polyetherdiol, Polyesterdiol, α,ω-Hydroxyalkylpolysiloxane u.a.

Als Isocyanate können die aus dem Stand der Technik bekannten und üblichen Verbindungen eingesetzt werden. Vorzugsweise verwendet an als Isocyanate bei Raumtemperatur flüssige oder bei Temperaturen bis zu 250°C ohne Zersetzung schmelzende aliphatische oder aromatische Di- oder Polyisocynate. Beispiele bevorzugter Isocyanate sind Isophorondiisocyanat, Hexamethylendiisocyanat, Dicyclohexylmethan-4,4'-diisocyanat, Diphenylmethan-4,4'-diisocyanat oder Toluylen-2,4/2,6-diisocyanat.

Als Reaktionspartner für das Isocyanat werden vorzugsweise bei Raumtemperatur flüssige oder bei Temperaturen bis zu 250°C ohne Zersetzung schmelzende aliphatische oder aromatische Di- oder Polyalkohole, aliphatische oder aromatische Di- oder Polyamine, Aminoalkohole oder Polysiloxane mit mindestens zwei oder mehreren Hydroxyl- oder Aminogruppen verwendet.

Beispiele solcher Verbindungen sind Polyole, wie hydroxyterminierte Polyether oder Polyester, insDesondere solche einer mittleren Molekularmasse von 400 bis 100 000. Geeignet sind ferner Polyether-Ester oder Polyester-Ether, die durch Alkoxylierung von Carbonsäuren oder Polyestern bzw. durch Kondensation von Polyethern mit mehrfunktionellen Carbonsäuren erhalten werden. Ausgangsmaterial zur Herstellung der Pclyether ist insbesondere das 1,2-Propylenoxid. Ein weiteres wichtiges Alkylenoxid ist Ethylenoxid. Jedoch können auch Epoxide mit längerer Kohlenwasserstoffkette verwendet werden. Polyester können durch Polykondensation von mehrfunktionellen Carbonsäuren und mehrfunktionellen Hydroxylverbindungen hergestellt werden. Weitere Herstellungsmöglichkeiten bestehen in der Polykondensation von Hydroxycarbonsäuren, in der Polymerisation von Ringestern (Lactonen), in der Polyaddition von Polycarbonsäureanhydriden mit Epoxiden und in der Umsetzung von Säurechloriden mit Alkalisalzen von Hydroxylverbindungen.

Beispiele geeigneter Di- oder Polyamine sind Piperazin, Bis(4-aminocyclohexyl)methan, 1,5-Diamino-2,2-dimethyl-propan, 1-Amino-3-aminomethyl-3,5,5-trimethyl-cyclchexan, 1,3-Phenylendiamin, Hexamethylendiamin, α,ω-Diaminoorganopolysiloxane, Polyetheramine und 2,2,4-/2,4,4-Trimethylhexamethylendiamin.

Als Katalysatoren können die für derartige Reaktionen bekannten Katalysatoren, wie z.B. tertiäre Amine, Zinnoctoat oder Dibutylzinndilaurat, verwendet werden.

In den folgenden Beispielen wird das erfindungsgemäße Verfahren näher erläutert, und es werden die Eigenschaften der erhaltenen Polymeren beschrieben.

### 1. Herstellung von Polysiloxanharnstoffen aus α,ω-Aminosiloxanen und Isocyanaten entsprechend der Reaktion

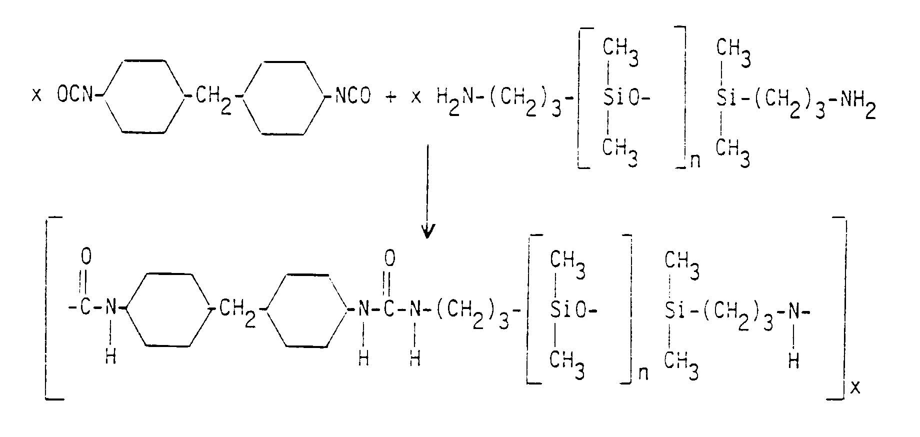

### Beispiel 1

Es werden folgende Pulverbatches hergestellt:

### Batch A

In einem einfachen Mischer (Typ Küchenmaschine) werden 30 g pyrogene hydrophobe Kieselsäure (Oberfläche nach BET 110 ± 20 m²/g, im Handel unter der Bezeichnung Aerosil R972 erhältlich) vorgelegt. Innerhalb von ca. 15 Minuten werden unter gleichmäßigem Rühren 60 g Aminosiloxan (Si-Anzahl 230, NH₂-Equivalent 8750) der allgemeinen Formel 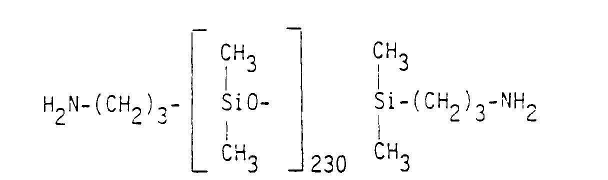 gleichmäßig zugetropft. Es resultiert ein feinkörniges, rieselfähiges Pulver.

### Batch B

Wie vorstehend beschrieben werden 60 g Dicyclohexylmethan-4,4'-diisocyanat (NCO-Equivalent 132) mit 30 g der vorbeschriebenen Kieselsäure vermischt. Es resultiert wiederum ein feinkörniges, rieselfähiges Pulver.

Es werden nun 100,0 g Batch A und 1,5 g Batch B gemischt und durch Schütteln homogenisiert. Dieses Pulvergemisch ist nach 8 Wochen Lagerung in einem offenen oder geschlossenen Behälter bei Raumtemperatur optisch unverändert und weiterhin rieselfähig. Nach 8 Wochen Lagerung bei 50°C färbt sich das Gemisch leicht gelb, bleibt aber weiter rieselfähig.

Das Gemisch wird nun auf eine Doppelwalze gegeben und unter folgender Beanspruchung gewalzt:

| Temperatur | Raumtemperatur bis 100°C |
|---|---|
| Rpm | 33 |
| Friktion | 1,2 |
| Spaltbreite | 0,2 mm |
| Zeit | 30 Minuten |

Nach Aufgeben des Pulvers auf die Walzen entsteht nach ca. 30 Sekunden ein zusammenhängendes Walzfell, das im weiteren Verlauf des Walzens umgelegt werden kann. Mit Walzbeginn wird Wärme zum weiteren Abreagieren zugeführt. Nach Erreichen von 100°C in 15 Minuten wird zurückgekühlt und nach weiteren 15 Minuten bei ca. 40°C das Walzfell abgenommen.

Man erhält eine klebfreie, kautschukartige, nahezu transparente Folie. Zum vollständigen Ausreagieren wird die Folie wahlweise getempert oder einige Tage abgelagert.

### Beispiel 2

Es werden folgende Pulverbatches hergestellt:

### Batch A

In einem einfachen Mischer (Typ Küchenmaschine) werden 30 g pyrogene hydrophobe Kieselsäure (Oberfläche nach BET 110 ± 20 m²/g, im Handel unter der Bezeichnung Aerosil R972 erhältlich) vorgelegt. Innerhalb von ca. 15 Minuten werden unter gleichmäßigem Rühren 60 g Aminosiloxan entsprechend Beispiel 1 gleichmäßig zugetropft. Es resultiert ein feinkörniges, rieselfähiges Pulver.

### Batch B

Wie vorstehend beschrieben werden 60 g Isophorondiisocyanat (NCO-Equivalent 111) mit 30 g der vorbeschriebenen Kieselsäure vermischt. Es resultiert wiederum ein feinkörniges, rieselfähiges Pulver.

Es werden nun 100,0 g Batch A und 1,3 g Batch B gemischt und durch Schütteln homogenisiert.

Entsprechend Beispiel 1 wird durch Aufgeben des Gemisches in eine Doppelwalze eine nahezu transparente klebfreie Elastomerfolie erhalten.

### Beispiel 3

Es werden folgende Pulverbatches hergestellt:

### Batch A

In einem einfachen Mischer (Typ Küchenmaschine) werden 30 g pyrogene hydrophobe Kieselsäure (Oberfläche nach BET 110 ± 20 m²/g, im Handel unter der Bezeichnung Aerosil R972 erhältlich) vorgelegt. Innerhalb von ca. 15 Minuten werden unter gleichmäßigem Rühren 60 g Aminosiloxan (Si-Anzahl 15, NH₂-Equivalent 621) der allgemeinen Formel 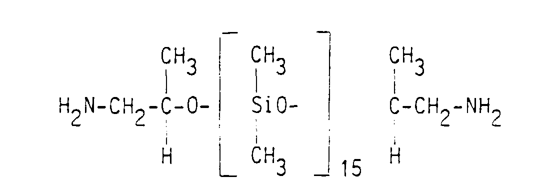 gleichmäßig zugetropft. Es resultiert ein feinkörniges, rieselfähiges Pulver.

### Batch B

Wie vorstehend beschrieben werden 60 g Isophorondiisocyanat (NCO-Equivalent 111) mit 30 g der vorbeschriebenen Kieselsäure vermischt. Es resultiert wiederum ein feinkörniges, rieselfähiges Pulver.

Es werden nun 100,0 g Batch A und 15,8 g Batch B gemischt und durch Schütteln homogenisiert.

Entsprechend Beispiel 1 wird durch Aufgeben des Gemisches in eine Doppelwalze eine klebfreie Elastomerfolie mit besseren mechanischen Eigenschaften und höherer Transparenz als gemäß Beispiel 1 oder 2 erhalten.

Die Gemische der Batches A und B lassen sich auch auf einem Extruder mit guten Ergebnissen verarbeiten.

### 2. Herstellung von Polyoxyalkylenharnstoffen aus Oxyalkylenaminen und Isocyanaten entsprechend der Reaktion

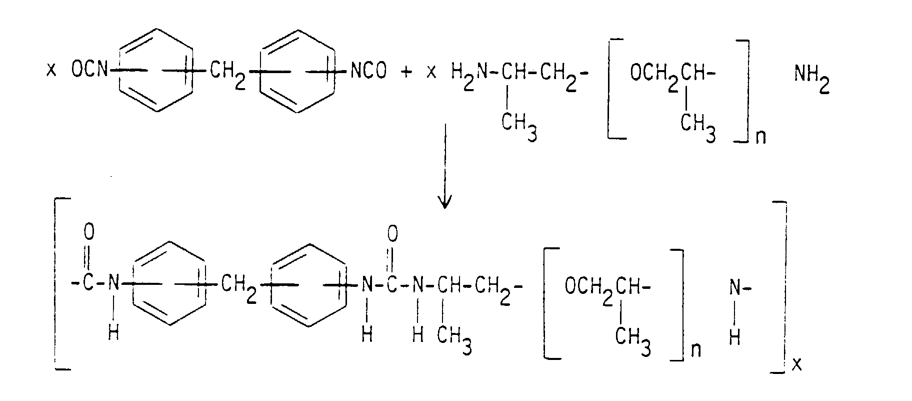

### Beispiel 4

Es werden folgende Pulverbatches hergestellt:

### Batch A

In einem einfachen Mischer (Typ Küchenmaschine) werden 30 g gefällte Kieselsäure mit einer BET-Oberfläche von 100 m²/g vorgelegt. Innerhalb von ca. 15 Minuten werden unter gleichmäßigem Rühren 60 g Oxyalkylendiamin der allgemeinen Formel 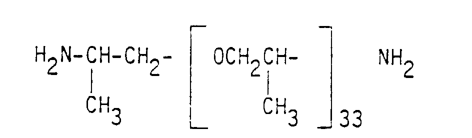 (NH₂-Equivalent 1000) gleichmäßig zugegeben. Es resultiert ein feinkörniges, rieselfähiges Pulver.

### Batch B

Wie vorstehend beschrieben werden 60 g Diethyltoluoldiamin (NH₂-Equivalent 89) mit 30 g gefällter Kieselsäure mit einer BET-Oberfläche von 100 m²/g vermischt. Es resultiert wiederum ein feinkörniges, rieselfähiges Pulver.

### Batch C

60 g Diphenylmethandiisocyanat (NCO-Equivalent 183) werden mit 30 g gefällter Kieselsäure mit einer BET-Oberfläche von 100 m²/g vermischt.

Es werden

| | |
|---|---|
| 100,0 g | Batch A mit |
| 34,8 g | Batch B und |
| 90,4 g | Batch C gemischt. |

Das Gemisch wird nun auf eine Doppelwalze gegeben und unter folgender Beanspruchung gewalzt:

| Temperatur | Raumtemperatur |
|---|---|
| Rpm | 33 |
| Friktion | 1,2 |
| Spaltbreite | 0,2 mm |
| Zeit | 10 Minuten |

Nach Aufgeben des Pulvers auf die Walzen entsteht nach ca. 30 Sekunden ein zusammenhängendes Walzfell, das im weiteren Verlauf des Walzens umgelegt werden kann.

an erhält ein transluzentes Produkt mit guten mechanischen Eigenschaften.

### 3. Herstellung von Polyurethanen aus Polyolen und Isocyanaten entsprechend der Reaktion

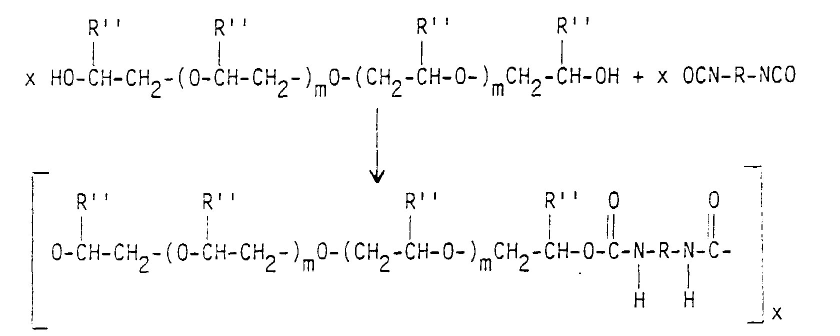

### Beispiel 5

Es werden folgende Pulverbatches hergestellt:

### Batch A

In einem einfachen Mischer (Typ Küchenmaschine) werden 25 g pyrogen erzeugte Kieselsäure einer Oberfläche nach BET von 200 ± 25 m²/g (im Handel unter der Bezeichnung Aerosil 200 erhältlich) vorgelegt. Innerhalb von ca. 15 Minuten werden unter gleichmäßigem Rühren 75 g eines Polyethers der Formel 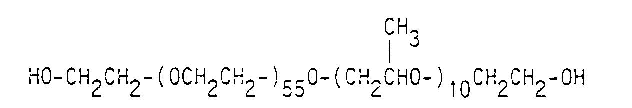 (OH-Equivalent 1560, im Handel unter der Bezeichnung Voranol EP 1900 erhältlich) gleichmäßig zugegeben. Es resultiert ein feinkörniges, rieselfähiges Pulver.

### Batch B

Wie vorstehend beschrieben werden 75 g eines Polyethertriols der Formel 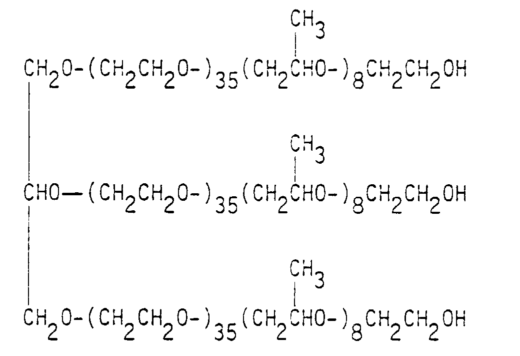 (OH-Equivalent 2000, im Handel unter der Bezeichnung Desmophen E 7963 erhältlich) 25 g der vorgenannten Kieselsäure gleichmäßig zugegeben. Es resultiert ein feinkörniges, rieselfähiges Pulver.

### Batch C

Wie vorstehend beschrieben werden 75 g Butandiol-1,4 25 g der vorgenannten Kieselsäure gleichmäßig zugegeben. Es resultiert ein feinkörniges, rieselfähiges Pulver.

### Batch D

75 g Diphenylmethandiioscyanat (NCO-Equivalent 168) werden in 25 g der vorgenannten Kieselsäure eingebracht.

### Batch E

75 g Triethylendiamin werden mit 25 g der vorgenannten Kieselsäure vermischt.

### Batch F

75 g des in Beispiel 1 verwendeten Aminosiloxans (Aminequivalent 8750) werden mit 25 g der vorgenannten Kieselsäure vermischt.

Es werden

| | |
|---|---|
| 40,0 g | Batch A mit |
| 40,0 g | Batch B, |
| 8,0 g | Batch C, |
| 37,6 g | Batch D und |
| 0,8 g | Batch E |

vermischt und auf einen Walzenstuhl nach Beispiel 1 gegeben. Es resultiert sofort ein Walzfell, das in 15 Minuten auf 100°C aufgeheizt und danach in 15 Minuten auf ca. 40°C rückgekühlt wird. Die abgenommene Kunststoffbahn zeigt gute mechanische Eigenschaften.

### Beispiel 6

Entsprechend Beispiel 5 wird folgendes Gemisch verarbeitet:

| | |
|---|---|
| 40,0 g | Batch A, |
| 40,0 g | Batch B, |
| 8,0 g | Batch C, |
| 37,7 g | Batch D, |
| 8,0 g | Batch F und |
| 0,8 g | Batch E |

werden vermischt und auf einen Walzenstuhl nach Beispiel 1 gegeben. Es resultiert sofort ein Walzfell, das in 15 Minuten auf 100°C aufgeheizt und danach in 15 Minuten auf ca. 40°C rückgekühlt wird. Die abgenommene Kunststoffbahn zeigt gegenüber dem Produkt von Beispiel 5 verbesserte mechanische Eigenschaften.

### Beispiel 7

Es werden folgende Pulverbatches hergestellt:

### Batch A

In einem einfachen Mischer werden 30 g Pigmentruß, der auf ca. 100°C erwärmt ist, vorgelegt. Innerhalb von ca. 1 Minute werden unter gleichmäßigem Rühren 70 g Oxyalkylendiamin der allgemeinen Formel 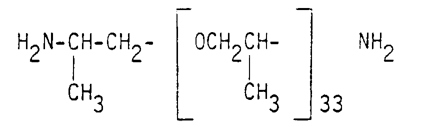 (NH₂-Equivalent 1000), welches auf ca. 70°C erwärmt ist, zugegeben. Es resultiert ein rieselfähiges Pulver.

### Batch B

Wie vorstehend beschrieben werden 70 g Diphenylmethandiisocyanat (NCO-Equivalentgewicht 183) mit 30 g Ruß wie oben vermischt. Es entsteht ebenfalls ein rieselfähiges Pulver.

Es werden

| | |
|---|---|
| 100,0 g | der Pulvermischung A mit |
| 18,2 g | der Pulvermischung B vermischt. |

Das Gemisch wird auf eine Doppeiwalze gegeben und unter folgender Beanspruchung gewalzt:

| | |
|---|---|
| Temperatur | 80°C |
| Rpm | 33 |
| Friktion | 1,2 |
| Spaltbreite | 0,2 mm |
| Zeit | 3 Minuten |

Nach Aufgeben des Pulvers auf die Walzen entsteht nach ca. 1 Minute ein zusammenhängendes Walzfell.

## Patentansprüche

1. Verfahren zur Herstellung von Polymeren, welche Polyurethan- und/oder Polyharnstoff-Gruppierungen aufweisen und feinteilige Füllstoffe enthalten, durch Umsetzung von Verbindungen, welche mindestens zwei Hydroxyl- und/oder Aminogruppen aufweisen, mit mindestens difunktionellen Isocyanaten, gegebenenfalls in Gegenwart von Katalysatoren, und Vermischen mit geeigneten Füllstoffen, dadurch gekennzeichnet, daß man
a) als Feststoffe Aktiv-Kohle oder Blähton in Form eines oberflächenreichen, möglichst feinteiligen Granulates, Ruß oder Kieselsäure mit einer spezifischen Oberfläche nach BET von 50 bis 400 m²/g verwendet,
b) die Hydroxyl- und/oder Aminogruppen aufweisenden Verbindungen und die Isocyanate bei einer Temperatur, bei der die Reaktionskomponenten flüssig vorliegen, jeweils getrennt mit den feinteiligen Feststoffen in solchen Mengen innig vermischt, daß rieselfähige Pulver erhalten werden,
c) die erhaltenen Pulver in den stöchiometrisch erforderlichen Mengen vermischt und
d) das Pulvergemisch der Einwirkung von Scherkräften bei gegebenenfalls erhöhter Temperatur unterwirft.

2. Verfahren nach Anspruch 1, dadurch gekennzeichnet, daß man pyrogen erzeugte oder gefällte Kieselsäure verwendet.

3. Verfahren nach Anspruch 1 oder 2, dadurch gekennzeichnet, daß man Kieselsäure mit hydrophobierter Oberfläche verwendet.

4. Verfahren nach einem oder mehreren der vorhergehenden Ansprüche, dadurch gekennzeichnet, daß man die Ausgangsverbindungen A jeweils mit den gewünschten Feststoffen B in einem Gewichtsverhältnis von A : B gleich 95 : 5 bis 60 : 40 vermischt.

5. Verfahren nach einem oder mehreren der vorhergehenden Ansprüche, dadurch gekennzeichnet, daß man als Reaktionspartner für das Isocyanat bei Raumtemperatur flüssige oder bei Temperaturen bis zu 250 °C ohne Zersetzung schmelzende aliphatische oder aromatische Di- oder Polyalkohole, aliphatische oder aromatische Di- oder Polyamine, Aminoalkohole oder Polysiloxane mit mindestens zwei oder mehreren Hydroxyl- oder Aminogruppen verwendet.

6. Verfahren nach einem oder mehreren der vorhergehenden Ansprüche, dadurch gekennzeichnet, daß man als Isocyanate bei Raumtemperatur flüssige oder bei Temperaturen bis zu 250 °C ohne Zersetzung schmelzende aliphatische oder aromatische Di- oder Polyisocyanate verwendet.

7. Verfahren nach Anspruch 6, dadurch gekennzeichnet, daß man als Isocyanate Isophorondiisocyanat, Hexamethylendiisocyanat, Dicyclohexylmethan-4,4'-diisocyanat, Diphenylmethan-4,4'-diisocyanat oder Toluylen-2,4/2,6-diioscyanat verwendet.

8. Verfahren nach einem oder mehreren der vorhergehenden Ansprüche, dadurch gekennzeichnet, daß man der Alkohol- oder Aminkomponente einen die Polyharnstoff- oder Polyurethanbildungsreaktion beschleunigenden an sich bekannten Katalysator zumischt.

9. Verfahren nach einem oder mehreren der vorhergehenden Ansprüche, dadurch gekennzeichnet, daß man in der Verfahrensstufe d) das Reaktionsgemisch durch Behandlung in einer Doppelwalze, einem Kneter, einer Spritzgießmaschine oder einem Extruder der Einwirkung von Scherkräften aussetzt.

## Claims

1. Process for the preparation of polymers which contain polyurethane and/or polyurea groupings and comprise finely divided fillers by reaction of compounds which contain at least two hydroxyl and/or amino groups with at least difunctional isocyanates, if appropriate in the presence of catalysts, and mixing with suitable fillers, characterized in that
a) active charcoal or expanded clay in the form of granules which have a high surface area and are as finely divided as possible, carbon black or silicic acid having a specific BET surface area of 50 to 400 m²/g are used as fillers,
b) the compounds containing hydroxyl and/or amino groups and the isocyanates are each intimately mixed separately with the finely divided fillers at a temperature at which the reaction components are present in liquid form, in amounts such that free-flowing powders are obtained,
c) the resulting powders are mixed in the stoichiometrically required amounts and
d) the powder mixture is subjected to the action of shearing forces, if appropriate at elevated temperature.

2. Process according to Claim 1, characterized in that pyrogenically produced or precipitated silicic acid is used.

3. Process according to Claim 1 or 2, characterized in that silicic acid having a hydrophobized surface is used.

4. Process according to one or more of the preceding claims, characterized in that the starting compounds A are each mixed with the desired fillers B in a weight ratio of A:B of 95:5 to 60:40.

5. Process according to one or more of the preceding claims, characterized in that aliphatic or aromatic di- or polyalcohols, aliphatic or aromatic di- or polyamines, aminoalcohols or polysiloxanes having at least two or more hydroxyl or amino groups, which compounds are liquid at room temperature or melt without decomposition at temperatures up to 250°C, are used as reaction partners for the isocyanate.

6. Process according to one or more of the preceding claims, characterized in that aliphatic or aromatic di- or polyisocyanates which are liquid at room temperature or melt without decomposition at temperatures up to 250°C are used as the isocyanates.

7. Process according to Claim 6, characterized in that isophorone diisocyanate, hexamethylene diisocyanate, dicyclohexylmethane 4,4'-diisocyanate, diphenylmethane 4,4'-diisocyanate or toluylene-2,4/2,6-diisocyanate are used as the isocyanates.

8. Process according to one or more of the preceding claims, characterized in that the alcohol or amine component is admixed to a catalyst which is known per se and accelerates the polyurea or polyurethane formation reaction.

9. Process according to one or more of the preceding claims, characterized in that, in process stage d), the reaction mixture is exposed to the action of shearing forces by treatment in a double-roll mill, a kneader, an injection moulding machine or an extruder.

## Revendications

1. Procédé de préparation de polymères présentant des groupes de polyuréthane et/ou de polyurée et contenant des charges finement divisées, par réaction de composés présentant au moins deux groupes hydroxyles et/ou amino, avec des isocyanates au moins bifonctionnels, éventuellement en présence de catalyseurs, et mélange avec des charges appropriées, caractérisé en ce que :
a) comme solides, on utilise du charbon actif ou de l'argile expansée sous la forme de granules concentrés à la surface et divisés aussi finement que possible, du noir de carbone ou de l'acide silicique ayant une surface spécifique selon BET de 50 à 400 m²/g,
b) les composés contenant des groupes hydroxyles et/ou amino et les isocyanates sont mélangés intimement, à une température à laquelle les composants de réaction sont liquides, à chaque fois séparément avec les solides finement divisés, en des quantités telles qu'on obtient des poudres aptes à l'écoulement,
c) on mélange les poudres obtenues en les quantités stoechiométriques nécessaires, et
d) on soumet le mélange pulvérulent à l'action de forces de cisaillement, éventuellement à une température augmentée.

2. Procédé selon la revendication 1, caractérisé en ce qu'on utilise de l'acide silicique pyrogéné ou précipité.

3. Procédé selon la revendication 1 ou 2, caractérisé en ce qu'on utilise de l'acide silicique avec une surface rendue hydrophobe.

4. Procédé selon l'une ou plusieurs des revendications précédentes, caractérisé en ce qu'on mélange les composés de départ A à chaque fois avec les substances solides B souhaitées à un rapport en poids de A:B = 95 : 5 à 60 : 40.

5. Procédé selon l'une ou plusieurs des revendications précédentes, caractérisé en ce qu'on utilise, comme partenaires de réaction pour l'isocyanate, des diols ou des polyols aliphatiques ou aromatiques liquides à la température ambiante ou qui fondent sans décomposition à des températures allant jusqu'à 250°C, des diamines ou des polyamines aliphatiques ou aromatiques, des aminoalcools ou des polysiloxanes ayant au moins deux ou plusieurs groupes hydroxyles ou amino.

6. Procédé selon l'une ou plusieurs des revendications précédentes, caractérisé en ce qu'on utilise, comme isocyanates, des diisocyanates ou des polyisocyanates aliphatiques ou aromatiques liquides à la température ambiante ou fondant sans décomposition à des températures allant jusqu'à 250°C.

7. Procédé selon la revendication 6, caractérisé en ce qu'on utilise, comme isocyanates, l'isophorone-diisocyanate, l'hexaméthylène-diisocyanate, le dicyclohexylméthane-4,4'-diisocyanate, le diphénylméthane-4,4'-diisocyanate ou le toluylène-2,4/2,6-diisocyanate.

8. Procédé selon l'une ou plusieurs des revendications précédentes, caractérisé en ce qu'on ajoute un catalyseur connu en soi, accélérant la réaction de formation de polyurée ou de polyuréthane, au composant alcool ou amino.

9. Procédé selon l'une ou plusieurs des revendications précédentes, caractérisé en ce que, lors de l'étape de procédé d), on soumet le mélange de réaction à l'action de forces de cisaillement par traitement dans un double cylindre, un malaxeur, une machine de moulage par injection ou une extrudeuse.
